(19) Europäisches Patentamt
European Patent Office
Office européen des brevets

(11) **EP 1 358 371 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(21) Anmeldenummer: **01994600.3**

(22) Anmeldetag: **07.12.2001**

(51) Int Cl.:
*D01F 2/00* (2006.01) *C08J 5/18* (2006.01)

(86) Internationale Anmeldenummer:
**PCT/DE2001/004620**

(87) Internationale Veröffentlichungsnummer:
**WO 2002/048435 (20.06.2002 Gazette 2002/25)**

(54) **VERFAHREN ZUR HERSTELLUNG VON CELLULOSEENDLOSFORMKÖRPERN**

METHOD FOR PRODUCING CONTINUOUS MOULDED BODIES CONSISTING OF CELLULOSE

PROCEDE DE FABRICATION DE CORPS PROFILES SANS FIN EN CELLULOSE

(84) Benannte Vertragsstaaten:
**DE FI SE**

(30) Priorität: **13.12.2000 DE 10062083**

(43) Veröffentlichungstag der Anmeldung:
**05.11.2003 Patentblatt 2003/45**

(73) Patentinhaber: **THÜRINGISCHES INSTITUT FÜR TEXTIL- UND KUNSTSTOFF-FORSCHUNG e.V.**
**07407 Rudolstadt (DE)**

(72) Erfinder:
• **MICHELS, Christoph**
**07407 Rudolstadt (DE)**
• **KOSAN, Birgit**
**07407 Rudolstadt (DE)**

(74) Vertreter: **Plate, Jürgen et al**
**Plate Schweitzer Zounek**
**Patentanwälte**
**Rheingaustrasse 196**
**65203 Wiesbaden (DE)**

(56) Entgegenhaltungen:
**WO-A-01/68958 WO-A-02/18682**

• **MICHELS C ET AL: "LYOCELL PROCESS - MATERIAL AND TECHNOLOGICAL RESTRICTIONS" CHEMICAL FIBERS INTERNATIONAL, DEUTSCHER FACHVERLAG, DE, Bd. 50, Nr. 6, Dezember 2000 (2000-12), Seiten 556,558-561, XP000980856 ISSN: 0340-3343**

**Beschreibung**

Die Erfindung betrifft ein Verfahren zur Herstellung von Celluloseendlosformkörpern aus Zellstoff nach dem TrockenNaßextrusionsverfahren mit wässrigen Aminoxide, insbesondere N-Methyl-morpholin-N-oxid, bei dem man a) Zellstoff und wässriges Aminoxid mischt, unter Wasserentzug und Scherung in eine homogene Lösung überführt, b) die Lösung mindestens einem Verformungskanal zuführt und zum Celluloseendlosformkörper verformt, c) die verformte Lösung durch ein nicht ausfällendes Medium unter gleichzeitiger weiterer Verformung transportiert, d) den Celluloseendlosformkörper kurz vor Eintritt in das Fällbad, weitgehend senkrecht zu seiner Laufrichtung einer linienförmigen Luft- oder Gasströmung aussetzt und e) in einem Fällbad den Celluloseendlosformkörper ausfällt, durch Ablenken über eine Galette / Walze vom Fällbad trennt, in einer mehrstufigen Nachbehandlungsvorrichtung wäscht, gegebenenfalls bleicht, aviviert, trocknet und den Celluloseendlosformkörper aufwickelt oder in Stapel schneidet und trocknet.

**[Stand der Technik]**

Aus dem US 4 246 221 und US 4 416 698 ist das Lösen von Cellulose in wasserhaltigen Aminoxiden, das Verformen in Spinnkapillaren unter geringer Scherung, das Verziehen der Lösungsstrahlen in einem großen Luftspalt, das Fällen der Cellulose durch ein wässriges Aminoxid enthaltendes Spinnbad und das Abziehen der Cellulosefäden über eine Galette bekannt. Im US 5 417 909 wird ein Verfahren beschrieben, dass die Lösung unter hoher Scherung in den Spinnkapillaren verformt, die Lösungsstrahlen in einem kurzen Luftspalt verzieht, die Cellulose ausfällt und die Fäden bzw. Fadenschar über einen Spinntrichter erfasst und im Gleichstrom transportiert. In den EP 0 430 926, EP 0 494 852, EP 0 756 025 und WO 94/28 210 werden bestimmte Düsen mit unterschiedlicher Spinnkapillarengeometrie und -anordnung beschrieben. Die WO 96/20 300 befasst sich mit dem Abstand zwischen zwei Spinnkapillaren und dem Weg zwischen Spinnkapillare und Umlenkorgan im Fällbad. Die EP 0 584 318, EP 0 671 492, EP 0 795 052, WO 94/28 218 und WO 96/21 758 beschreiben die unterschiedlichsten Formen des Behandelns der Fadenschar im Spalt zwischen Spinndüse und Fällbad mit Luft unterschiedlichen Wassergehaltes. Im EP 0 797 694 sollen Lyocell-Pasern mit verbesserten Eigenschaften dadurch erhalten werden, dass eine Beziehung zwischen Zellstoff - DP, Cellulosekonzentration und Abzugsgeschwindigkeit der Form $\quad K = \dfrac{\sqrt{DP} \cdot c}{w^{0,075}} \geq 259 \quad$ einzuhalten ist. Das Patent enthält weder Angaben zur Methode der DP Bestimmung noch Angaben zur Veränderung des DP während des Lösens. Nach der DE 100 25 230 und DE 100 25 231 sollen Fasern mit hoher Schlingenreißfestigkeit und geringer Fibrillierung dadurch erhalten werden, dass der mittlere Wärmestrom und/oder die mittlere Beschleunigung über der Luftspaltbreite auf einem bestimmten Niveau gesteuert werden.

Im EP 0 659 219 wird die Herstellung einer Cellulosefaser mit geringerer Fibrillierneigung beschrieben, indem eine empirische Formel aus spinndüsenlochdurchmesser, Spinnmassestrom, Titer, Breite des Luftspaltes und Feuchtegehalt der Anblasluft einen Wert von 10 nicht überschreiten soll. Im EP 0731 856 soll eine geringere Fibrillierneigung dadurch erreicht werden, dass die Anblasluft aliphatische Alkohole enthält und im EP 0 853 146 dadurch, dass die Fällung in zwei oder mehreren Stufen erfolgt.

Weiterhin ist bekannt, Faserstruktur und -eigenschaften durch bestimmte Nachbehandlungsverfahren zu verändern, wie Behandlung mit Vernetzungsmitteln EP 0 783 602, EP 0 796 358, mit 10 - 18 % iger Natronlauge WO 97/45 574 oder mit Alkanol, diol, -triol in mindestens einem Waschbad WO 97/25 462.

Nach WO 98/58102 und WO 98/58103 soll der Einsatz von Zellstoffmischungen mit stark unterschiedlichem DP und das Behandeln der Fasern im Luftspalt mit Luft definierter Feuchte zu erhöhter Spinnsicherheit und zu Fasern mit besonderen Eigenschaften hinsichtlich Feinheit und Fibrillierung führten. Alle genannten Verfahren berücksichtigen die Eigenschaften der Cellulose, insbesondere in Lösung, nur ungenügend, betrachten die Fadenbildung beim Lyocell - Prozess, d.h. die Verformung in der Düse und im Luftspalt nicht als eine Einheit, sondern vorwiegend statisch und versuchen durch Modifizieren einzelner Schritte wie z.B. Zellstoff-DP und Cellulosemischung, Spinndüsengeometrie, Wassergehalt der Luftspaltatmosphäre, Fällbadgeßtaltung und/ oder der Nachbehandlung die Faserstruktur und die Fasereigenschaften zu beeinflussen.

In der älteren, nicht vorveröffentlichten WO 02/18682 ist ein Verfahren zur Herstellung von Cellulosefaser und -filament garnen aus Zellstoff nach dem Trocken/Naß-Extrusionsverfahren mit wässrigen Aminoxiden offenbart. Dabei wird eine homogene, viskoelastische Lösung der Cellulose in wässrigem Aminoxid, insbesondere in wäßrigem N-Methyl-morpholin-N-oxid, mit einer Relaxationszeit im Bereich von 0,5 bis 80 Sekunden bei 85 °C mindestens einer Spinndüse zugeführt und verformt. Der dabei entstehende Lösungsstrahl wird dann unter weiterer Dehnverformung durch ein nichtfällendes Medium, im allgemeinen Luft, und anschließend durch ein Fällbad geführt. In dem Fällbad wird er als Cellulosefaden bzw. Cellulose-Padenochar ausgefällt. In den Beispielen 1 und 4 ist darüber hinaus ein linienförmiges Anblasen des verformten Lösungsstrahls in einem Winkel von etwa 80 ° zu dessen Laufrichtung bzw. senkrecht zur Laufrichtung in der Luftstrecke unmittelbar vor dem Eintritt in das Fällbad beschrieben.

**[Aufgabe der Erfindung]**

Aufgabe der vorliegenden Erfindung ist die Schaffung eines Verfahrene mit einem verbesserten Fadenbildungsprozess, das sowohl die Zelletoffeigenschaften als auch die zeitunabhängige themrodynamischen und zeitabhängige kinetischen Größen der Fadenbildung in jeweils einer Beziehung erfasst und somit aus den Celluloseparametern in der Lösung und wesentliche Verfahrensparametern eine gezielte Verausberechnung der Faser-, Filamentgarn- oder Polieeigenschaften gestattet. Es wurde gefunden, dass sich die Eigenschaften des in der Polymerlösung vorliegenden "Celluloseverhakungenetzwerkes" durch die Molmasse, ausgedrückt durch den mittels Cuoxam-Methode bestimmten Durchschnittspolymerisationsgrad, die Molmasseverteilung, ausgedrückt durch die rheologisch bestimmte molekulare Uneinheitlichkeit, die Cellulosekonzentration und die Dichte hinreichend charakterisieren lässt, und dass die Verformung im Düsenkanal unter dem Einfluse des Druckes und im Luftspalt unter dem Einfluss der axialen Dehnspannung als eine Einheit zu betrachten ist und durch die Wurzel des Quotienten aus der Eingangsfläche des Verformungskanals und der Feinheit des Endlosformkörpers charakterisiert wird.

Erfindungsgemäß besteht das Verfahren zur Herstellung von Endlosformkörpern aus mehreren Stufen bei denen man

a) Zellstoff und wässriges Aminoxid mischt, unter Wasserentzug und Scherung in eine homogene Lösung überführt,
b) die Lösung mindestens einem Verformungskanal zuführt und zum Celluloseendlosformkörper verformt,
c) die verformte Lösung durch ein nicht ausfällendes Medium unter gleichzeitiger weiterer Verformung transportiert,
d) den Celluloseendlosformkörper kurz vor Eintritt in das Fällbad, weitgehend senkrecht zu seiner Laufrichtung einer linienförmigen Luft- oder Gasströmung aussetzt,
e) in einem Fällbad den Celluloseendlosformkörper ausfällt, durch Ablenken über eine Galette / Walze vom Fällbad trennt, in einer mehrstufigen Nachbehandlungsvorrichtung wäscht, gegebenenfalls bleicht, aviviert, trocknet und den Celluloseendlosformkörper aufwickelt oder in Stapel schneidet und trocknet,

und die der Beziehung

$$10 \leq \frac{3 \cdot \sqrt{\frac{DP^{Lösung}_{Cuoxam}}{2}}}{\left(2-\frac{2}{U_\eta}\right)} + \frac{4\sqrt{\frac{DP^{Lösung}_{Cuoxam}}{2}}}{\left(2-\frac{2}{U_\eta^2}\right)} \cdot 105,4 \cdot \sqrt{\frac{A_E \cdot \rho_{Lösung} \cdot c_{Cell.}}{T_{10}}} \leq 90 \qquad (1)$$

genügen.
In dieser Beziehung bedeuten:

den durchschnittlichen Polymerisationsgrad der Cellulose in der Polymerlösung, bestimmt nach der Cuoxam-Methode,
$U_\eta$ die molekulare Uneinheitlichkeit, bestimmt aus rheologischen Daten der Celluloselösung,
$A_E$ den Eintrittsquerschnitt des Verformungskanals in $cm^2$
$\rho_{Lösung}$ die Dichte der Polymerlösung in $g/cm^3$
$c_{Cell.}$ die Cellulosekonzentration der Lösung in %
$T_{10}$ die Feinheit des Endlosformkörpers in dtex

Für Fasern und Filamente gilt $A_E = \frac{D_E^2 \cdot \pi}{4}$ und für Folien $A_E = H_E \cdot B_E$.

$D_E$ entspricht dem Eingangsdurchmesser des Verformungskanals in cm bei Fasern und Filamenten und $H_E$ der Eingangshöhe bzw. $B_E$ der Eingangsbreite des Verformungskanals in cm bei Folien. Der Faktor 105,4 ist ein reiner Umrechnungsfaktor für die unterschiedlichen Dimensionen und hat keine besondere physikalische Bedeutung.

Dabei ist ein Verfahren ausgeschlossen, bei dem

a) ein Fichtensulfit-Zellstoff mit einem Cuoxam-DP von 490 und einer molekularen Uneinheitlichkeit $U\eta$ von 5,7, der mit wässrigem N-Methyl-merpholin-N-oxid gemischt und in eine homogene Lösung mit einem Celluloseanteil von 12,8 Gew.-% und einer Dichte von 1,18 g/cm$^2$ überführt und unter Verwendung einer Spinndüse mit Spinnkapillarern, die einen Bintrittsdurchmesser $D_E$ von 228 $\mu$m, einen Austrittsdurchmesser $D_A$ von 150 $\mu$m und eine Länge von 0,05 cm aufweisen, zu Filamente geformt wird, die etwa 1 cm oberhalb des Eintritts in das Fällbad in einem Winkel von etwa 80 ˚C zur Fadenlaufrichtung mit Luft linienförmig angeblasen werden und die zu avivierten Fasern mit einer Feinheit von 1,10 dtex verarbeitet werden, oder daß

b) eine Mischung aus 98 % Eukalyptus- und 2 % Baumwoll-Linters-Zellstoff mit einem Cuoxam-DP von 543 und einer molekularen Uneinheitlichkeit $U_\eta$ von 6,05, die mit wässrigem N-Methyl-morpholin-N-oxid gemischt und in eine homogene Lösung mit einem Celluloseanteil von 10,6 Gew.-% und einer Dichte von 1,16 g/cm$^3$ überführt und unter Verwendung einer Spinndüse mit Spinnkapillaren, die einen Eintrittsdurchmesser $D_E$ von 221 $\mu$m, einen Austrittsdurchmesser $D_A$ von 140 $\mu$m und eine Länge von 0,05 cm aufweisen, zu Filamenten geformt wird, die etwa 1 cm oberhalb des Eintritts in das Fällbad senkrecht zur Fadenlaufrichtung mit Luft linienförmig angeblasen werden und zu avivierten Fasern mit einer Feinheit von 1,29 oder 1,30 dtex verarbeitet werden,

wie in den Beispielen 1 und 4 der älteren, jedoch nicht vorveröffentlichten WO 02/18682, offenbart.

In Beziehung (1) beschreibt der erste Term den isotropen Anteil der Festigkeit des Celluloseverhakungenetzwerkes und der zweite Term den Orientierungnanteil der Festigkeit, der durch die zeitunabhängige Änderung der Orientierung während der zweistufigen Dehnverformung entsteht.. Für Fasern und Filamente gilt vorzugsweise 30 < (1) < 70 und für Folien vorzugsweise 20 < (1) < 50.

Zur Bestimmung des Cuoxam-DP, füllt man die gelöste Cellulose als dünne Folie und löst diese nach dem Trocknen in Cuoxamlösung (bestehend aus 13 $\pm$ 0,6 g/l Kupfer, 200 $\pm$ 5 g/l Ammoniak, 16 g/l Ammoniumchlorid, 1 g/l Dextrose) zu einer 0,1 % igen Lösung vollstandig auf. Durch Messen der Durchlaufzeiten von Lösung und Lösungsmittel bei 23˚C in einem Kapillarviskosimeter, bestimmt man die relative Viskosität und berechnet unter Verwendung der Schulz-Blauchke-Gleichung die Grenzviskosität. Der Cuoxam-DP entspricht der zweifachen Wert der Cuoxam - Grenzviskosität.

Die Uneinheitlichkeit $U_\eta$ erhält man aus dem Quotienten von Nullscherviskosität $\eta_0$ und dem "Viskoeitätsanteil $\eta^{\#}$" am Kreuzungspunkt der dynamisch aufgenommenen Deformationskurven [G' ;G'' = f ($\omega$)], d.h. wenn Speicher- G' und Verlustmodul G'' gleich groß sind.

$$U_\eta = \frac{\eta_0}{\eta^{\#}} - 1$$

Der Index $\eta$ soll andeuten, dass die Uneinheitlichkeit aus rheologischen Daten und nicht aus der Bestimmung des Zahlen- und Massemittels der Molmasse resultiert. Die Messungen können mit einem Kegel/Platte-Rheometer, das sowohl Rotation ($\eta_0$) als auch Oszillation ($\eta^{\#}$) gestattet, unmittelbar an der zu verspinnenden Polymerlösung bzw. an einer separat hergestellten Lösung mit ca. 10 -12 % Cellulose vorgenommen werden.

Die Bestimmungsmethode ist in der Literatur ausführlich beschrieben (Michels Ch., Kosan B. Chemical Fibers International z.Z. im Druck).

In einer bevorzugten Ausführung des erfindungsgemäßen Verfahrens werden nicht nur die Cellulose- und zeitunabhängigen Parameter nach Beziehung (1), sondern auch die zeitabhängigen, kinetischen Parameter in den Stufen b), c) und d) über die Dehngeschwindigkeit nach der Beziehung

$$\dot{\varepsilon}_{D,a} = \sqrt{\dot{\varepsilon}_D \cdot \dot{\varepsilon}_a} = 19{,}1 \cdot 10^{-5} \frac{T_{10} \cdot v_a}{\rho_L \cdot c_{Cell.} \cdot D_E \cdot D_A} \sqrt{\frac{e^{\ln SV_D + \ln SV_a - 2}}{l \cdot a}} \left[ s^{-1} \right] \qquad (2)$$

gesteuert. Dabei werden für Spinnfasern und Folien die Parameter so gewählt, dass vorzugsweise $\dot{\varepsilon}_{D,a} \leq 60^{-1}$ und für Filamente vorzugsweise $\dot{\varepsilon}_{D,a} \leq 150 s^{-1}$ gilt.

In Beziehung (2) bedeuten:

$\dot{\varepsilon}_D$    die Dehngeschwindigkeit im Verformungskanal in s$^{-1}$

$\dot{\varepsilon}_a$    die Dehngeschwindigkeit im Luftspalt in s$^{-1}$

$D_A$     der Austrittsdurchmesser des Verformungskanals in cm

$v_a$     die Abzugsgeschwindigkeit in m/min

$SV_D$     die Spinnverformung im Düsenkanal     $SV_D = \left(\dfrac{D_E}{D_A}\right)^2$

$SV_a$     die Spinnverformung im Luftspalt     $SV_a \approx \dfrac{v_a}{v_s}$   mit

$v_s$     der Austrittsgeschwindigkeit aus dem Verformungskanal in m/min

l     die Länge des Verformungskanals in cm

a     die Länge des Luftspaltes in cm

Die Dehngeschwindigkeit bestimmt die "Güte" der Strukturausbildung im Endlosformkörper, insbesondere in den amorphen Bereichen. Mit abnehmender Dehngeschwindigkeit nimmt die Schlingenreißkraft und Reißdehnung bei Fasern bzw. die Knotenreißkraft und Reißdehnung bei Filamentgarnen exponentiell zu. Erstaunlicherweise findet weder das L/D - Verhältnis des zylindrischen Teils im Verformungskanal noch seine sonstige Formgestaltung einen Niederschlag in den erfindungsgemäß gefundenen Zusammenhängen.

Die Beziehungen (1) und (2) gelten formal nur für eine Temperatur. Da aber die Molmasse, Molmasseverteilung, Cellulosekonzentration und Dehngeschwindigkeit die Viskosität und die Relaxationszeit des Verhakungsnetzwerkes bestimmen und diese von der Temperatur abhängen, ist über die Temperaturfunktion der Viskosität

$$\left(\ln \eta = \ln K_\eta + \frac{E_A}{R}\cdot\frac{1}{T}\right) \text{ bzw. der Relaxationszeit } \left(\ln \lambda_\infty = \ln K_\lambda + \frac{B_\lambda}{T}\right) \text{ der Zusammenhang hergestellt.}$$

In der Praxis wählt man eine solche Temperatur, das die Nullscherviskosität im Verformungskanal zwischen 2000 und 10000 Pas, vorzugsweise zwischen 4000 und 7000 Pas und die Relaxationszeit zwischen 0,5 und 80 s, vorzugsweise 1 und 8 s liegt.

Die Erfindung soll an Hand von Beispielen erläutert werden.

**[Beispiele]**

Beispiel 1

Ein Holzzellstoff chinesischer Provenienz (Cuoxam DP 694) wurde nach enzymatischer Aktivierung in einem Vertikalkneter mit wässrigem Aminoxid (84 Masse % N-Methylmorpholin-N-oxid) gemischt und unter Erwärmung und Wasserentzug in eine homogene Lösung mit 10,3 Masse % Cellulose, einer Dichte von 1,163 g/cm$^3$, einer Nullscherviskosität von 9710 Pas und einer Relaxationszeit von 6,4 s bei 85°C übergeführt. Mit einem Viskositätsanteil von 1229 Pas am Kreuzungspunkt der dynamisch aufgenommenen Deformationsfunktionen von Speicher- und Verlustmodul bei 85°C ergibt sich eine Uneinheitlichkeit von 6,9.

Der Cuoxam DP der Cellulose in der Lösung vor dem Spinnen wurde zu 639 bestimmt. Das Verformen der Lösung zu Fasern mit einer Feinheit von 1,30 dtex erfolgte bei einer Spinnmassetemperatur von 90°C durch eine Spinndüse deren Spinnkapillaren einen Eintrittsquerschnitt von 3,834 10$^{-4}$ cm$^2$ besaßen. Mit diesen Parametern folgt aus Beziehung (1) ein Spannungswert von 44,8.

Die Prüfung der Fasern ergab folgende Parameter:

| | | |
|---|---|---|
| Faserfeinheit | dtex | 1,30 |
| Spannungsparameter n.(1) | ------ | 44,8 |
| Reißspannung trocken | cN/tex | 44,0 |
| Reißspannung daß | cN/tex | 35,2 |
| Reißkraftverhältnis | % | 80,0 |
| Reißdehnung trocken | % | 16,3 |
| Reißdehnung naß | % | 17,4 |

(fortgesetzt)

| Faserfeinheit | dtex | 1,30 |
|---|---|---|
| Schlingenreißkraft | cN/tex | 18,9 |
| Naßmodul | cN/tex | 173 |

Beispiel 1a

Ein Teil der Lösung aus Beispiel 1 wurde bei 92 °C durch eine Rundschlitzdüse von 3 cm Durchmesser und einem Eintrittsquerschnitt von 1,885 cm$^2$ zu einem Folieschlauch verformt, durch den Luftspalt unter einem solchen Innendruck transportiert, dass der Durchmesser des Folieschlauches von 3 cm erhalten blieb. Anschließend wurde der Folieschlauch gewaschen, getrocknet und für die Prüfung in Streifen von 1 cm Breite geschnitten.
Die Feinheit des Folieschlauches von 25 $\mu$m Dicke und 3 cm Durchmesser betrug 52300 dtex. Mit diesen Werten folgt für Beziehung (1) ein Spannungswert von 35,9.
Die Prüfung der Foliestreifen ergab:

| Foliefeinheit (1 cm) | dtex | 2775 |
|---|---|---|
| Spannungsparameter n. (1) | ------ | 35,9 |
| Reißspannung trocken | cN/tex | 33,8 |
| Reißdehnung trocken | % | 21,3 |

Beispiel 2

Ein Holzzellstoff amerikanische Provenienz (Weyerhaeuser Comp.) mit einem Cuoxam DP von 446 wurde ohne Vorbehandlung analog Beispiel 1 gelöst. Die homogene Lösung enthielt 13,2 % Cellulose, hatte eine Dichte von 1,192 g/cm$^3$, eine Nullscherviskosität von 3050 Pas und eine Relaxationszeit von 5,5 s bei 85°C. Der Cuoxam DP der gelösten Cellulose betrug 419, die Uneinheitlichkeit 7,6. Das Verformen der Lösung bei einer Massetemperatur von 80°C durch Spinnkapillaren mit einem Eintrittsquerschnitt von 2,137 10$^{-4}$ cm$^2$ führte zu Spinnfasern der Feinheit 1,85 dtex. Nach Beziehung (1) beträgt der Spannungsparameter 33,7.
Die Faserprüfung ergab:

| Faserfeinheit | dtex | 1,85 |
|---|---|---|
| Spannungsparameter n. (1) | ----- | 33,7 |
| Reißspannung trocken | cN/tex | 32,5 |
| Reißspannung naß | cN/tex | 23,3 |
| Reißkraftverhältnis | % | 71,7 |
| Reißdehnung trocken | % | 13,7 |
| Reißdehnung naß | % | 14,4 |
| Schlingenreißkraft | cN/tex | 7,5 |
| Naßmodul | cN/tex | 131 |

Beispiel 3

Ein Baumwoll-Linters-Zellstoff chinesischer Provenienz (Cuoxam DP 632) wurde analog Beispiel 1 zu einer homogenen Lösung mit 12,3 % Cellulose, einer Dichte von 1,183 g/cm$^3$, einer Nullscherviskosität von 7200 Pas und einer Relaxationszeit von 1,6 s bei 85°C verarbeitet. Der Cuoxam DP der gelösten Cellulose betrug 599, die Uneinheitlichkeit 3,5. Das Verspinnen bei 86°C über Spinnkapillaren mit einem Eintrittsquerschnitt von 3,97 10$^{-4}$ cm$^2$ ergab Spinnfasern mit einer Feinheit von 0,9 dtex. Für die Beziehung (1) ergibt sich ein Spannungswert von 55,4
Die Faserprüfung ergab:

| Faserfeinheit | dtex | 0,90 |
|---|---|---|
| Spannungsparameter n. (1) | ------ | 55,4 |
| Reißspannung trocken | cN/tex | 57,5 |
| Reißspannung naß | cN/tex | 52,8 |
| Reißkraftverhältnis | % | 91,8 |
| Reißdehnung trocken | % | 13,4 |
| Reißdehnung naß | % | 15,5 |
| Schlingenreißkraft | cN/tex | 20,9 |
| Naßmodul | cN/tex | 280 |

Beispiel 4

Aus einem Holzzellstoff amerikanischer Provenienz (Cuoxam DP 522) sollte eine Spinnfaser mit einer Feinheit von 1,30 dtex, einer Reißspannung > 40 cN/tex und einer Schlingenreißkraft > 20 cN/tex ersponnen werden. Das Vermessen einer Lösung mit 12,4 % Cellulose ergab einen Cuoxam DP von 510, eine Dichte von 1,184 g/cm$^2$ bei 85˚C, eine Nullscherviskosität von 6100 Pas, eine Relaxationszeit von 4,4 s bei 85˚C und eine Uneinheitlichkeit von 5,9. Mit diesen Werten ergibt die Beziehung (1) einen Spannungswert von 42,9. Für das Erspinnen von Fasern mit einer Schlingenreißkraft > 20 cN/tex sollte die Dehngeschwindigkeit nach Beziehung (2) in der Regel unter 25 s$^{-1}$ liegen. Für das Verformen der Polymerlösung im Düsenkanal bei einer Spinnmassetemperatur von 85,1˚C wurde eine Düse mit Spinnkapillaren von $D_E$ = 221 $\mu$m, $D_A$ = 140 $\mu$m und 1 = 0,05 cm gewählt. Im zylindrischen Teil der Spinnkapillare betrug das L/D-Verhältnis - 1. Das Verformen im Luftspalt mit a = 6,0 cm erfolgte mit einer Spritzgeschwindigkeit $v_s$ von 2,71 m/min und einer Abzugsgeschwindigkeit $v_a$ von 52,4 m/min. Mit diesen Parametern ergibt sich aus Beziehung (2) ein Wert für die Dehngeschwindigkeit von 13,4 s$^{-1}$. Nach Passieren von 5-5,5 cm des Luftspaltes wurde senkrecht zur Filamentbündellaufrichtung das Filamentbündel durch eine Schlitzdüse mit einem Luftstrom von10 1/min angeblasen.

Die Faserpnifung ergab folgende Werte:

| Faserfeinheit | dtex | 1,30 |
|---|---|---|
| Spannungsparameter n. (1) | ----- | 42,9 |
| Dehngeschwindigkeit n. (2) | s$^{-1}$ | 13,4 |
| Reißspannung trocken | cN/tex | 42,7 |
| Reißspannung maß | cN/tex | 33,1 |
| Reißkraftverhältnis | % | 77,5 |
| Reißdehnung trocken | % | 15,3 |
| Reißdehnung naß | % | 16,7 |
| Schlingenreißkraft | cN/tex | 22,8 |
| Naßmodul | cN/tex | 172 |

Beispiel 5

Zum Erspinnen eines Filamentgarnes der Feinheit 40 dtex f (32) mit einer Reiß-spannung > 40 cN/tex und einer Knotenfestigkeit > 24 cN/tex wurde ein Holzzellstoff (Cuoxam DP 544) in Aminoxid homogen gelöst und vermessen. Der Cuoxam DP der gelösten Cellulose betrug 510, die Cellulosekonzentration 12,8 %, die Uneinheitlich-keit 5,8, die Dichte bei 85˚C 1,188 g/cm$^3$, die Nullscherviskosität 5850 Pas und die Relaxationszeit 4,3 s.

Beim Verspinnen der Celluloselösung sollte die Dehngeschwindigkeit < 100 1/s sein. Für die Spinnbedingungen wurden folgende Parameter gewählt:

Spinndüse mit 32 Kapillaren, $D_E$ = 225 $\mu$m, $D_A$ = 90 $\mu$m, 1 = 0, 05 mm. Luftspalt von a = 5 cm, $v_s$ = 23,2 m/min, $v_a$

= 200 m/min.

Nach Passieren von 4-4,5 cm des Luftspaltes wird das Filamentbündel, senkrecht zur Laufrichtung mit 8 l/min aus einer Schlitzdüse angeblasen.

Der Spinnversuch führte zu folgenden Ergebnissen:

| Filamentfeinheit | dtex | 1,25 |
|---|---|---|
| Spannungsparameter n. (1) | ----- | 44,0 |
| Dehngeschwindigkeit n. (2) | $s^{-1}$ | 83,7 |
| Reißspannung trocken | cN/tex | 43,6 |
| Reißdehnung trocken | % | 9,2 |
| Knotenfestigkeit | cN/tex | 30,7 |

Beispiel 6

Zum Erspinnen eines technischen Filamentgarnes der Feinheit 750 dtex f (750) mit einer Reißspannung > 55 cN/tex und einer Knotenfestigkeit > 40 cN/tex wurde ein Baumwoll-Linters-Zellstoff (Cuoxam DP 650) ausgewählt, enzymatisch vorbehandelt und in Aminoxid-Monohydrat zu einer homogenen Lösung verarbeitet. Das Vermessen der Lösung ergab eine Cellulosekonzentration von 12,5 %, eine Cuoxam DP der gelösten Cellulose von 626, eine Dichte bei 85°C von 1,185, eine Nullschervis-kosität von 5600 Pas und eine Relaxationszeit von 1,6 s. Die Uneinheitlichkeit betrug 2,75. Eine Knotenfestigkeit von > 70 % der Garnfestigkeit verlangt eine Dehngeschwindigkeit < 50 l/s.

Zum Verformen bei einer Massetemperatur von 86°C diente eine Spinndüse aus Gold/Platin (70/30) mit 750 Spinnkapillaren von 0,05 cm Länge und einem Eingangsdurchmesser von 225 $\mu$m und einem Ausgangsdurchmesser von 90 $\mu$m. Das Ver-formen im Luftspalt von a = 2,5 cm beschleunigte die Filamente von der Spritzgeschwindigkeit 7,2 m/min auf die Abzugsgeschwindigkeit von 75,2 m/min. Kurz oberhalb der Fällbadoberfläche wurde das Filamentbündel senkrecht zu seiner Pilamentlaufrichtung mit 12 l/min aus einer Schlitzdüse angeblasen.

Der Spinnversuch führt zu folgendem Ergebnis:

| Filamentfeinheit | dtex | 1,00[1) | 1,02[2) |
|---|---|---|---|
| Spannungsparameter n. (1) | ----- | 60,9 | |
| Dehngeschwindigkeit n. (2) | $s^{-1}$ | 40,0 | |
| Reißspannung trocken | cN/tex | 59,8 | 60,2 |
| Reißdehnung trocken | % | 8,2 | 13,3 |
| Knotenfestigkeit | cN/tex | 46,6 | ---- |
| Schlingenreißkraft | cN/tex | --- | 17,1 |
| [1) Filamentgarnprüfung [2) Einzelfaserprüfung | | | |

**Patentansprüche**

1. Verfahren zur Herstellung von Celluloseendlosformkörpern aus Zellstoff nach dem Trocken-Naßextrusionsverfahren mit wässrigen Aminoxiden, insbesondere N-Methylmorpholin-N-oxid, bei dem man

    a) Zellstoff und wässriges Aminoxid mischt, unter Wasserentzug und Scherung in eine homogene Lösung überführt,
    b) die Lösung mindestens einem Verformungskanal zuführt und zum Celluloseendlosformkörper verformt,
    c) die verformte Lösung durch ein nicht ausfällendes Medium unter gleichzeitiger weiterer Verformung transportiert,
    d) den Celluloseendlosformkörper kurz vor Eintritt in das Fällbad, senkrecht zu seiner Laufrichtung einer linienförmigen Luft- oder Gasströmung aussetzt,

e) in einem Fällbad den Celluloseendlosformkörper ausfällt, durch Ablenken über eine Galette / Walze vom Fällbad trennt, in einer mehrstufigen Nachbehandlungsvorrichtung wäscht, gegebenenfalls bleicht, aviviert, trocknet und den Celluloseendlosformkörper aufwickelt oder in Stapel schneidet und trocknet,

**dadurch gekennzeichnet, dass** der Prozess in den Stufen

a) bis e) die Beziehung

$$10 \leq \frac{3 \cdot \sqrt{\dfrac{DP_{Cuoxam}^{L\ddot{o}sung}}{2}}}{\left(2 - \dfrac{2}{U_\eta}\right)} + \frac{\sqrt[4]{\dfrac{DP_{Cuoxam}^{L\ddot{o}sung}}{2}}}{\left(2 - \dfrac{2}{U_\eta^2}\right)} \cdot 105,4 \cdot \sqrt{\frac{A_E \cdot \rho_{L\ddot{o}sung} \cdot c_{Cell.}}{T_{10}}} \leq 90$$

worin

$DP_{Cuoxam}^{L\ddot{o}sung}$ den durchschnittlichen Polymerisationsgrad der Cellulose in der Polymerlösung, bestimmt nach der Cuoxam-Methode,
$U_\eta$ die molekulare Uneinheitlichkeit, bestimmt aus rheologischen Daten der Celluloselösung,
$A_E$ den Eintrittsquerschnitt des Verformungskanals in cm$^2$
$\rho_{L\ddot{o}sung}$ die Dichte der Polymerlösung in g/cm$^3$
$c_{Cell.}$ die Cellulosekonzentration der Lösung in %
$T_{10}$ die Feinheit des Endlosformkörpers in dtex

bedeuten und

$$A_E = \frac{D_E^2 \cdot \pi}{4}$$ die Bedingung für Fasern und Filamente bzw.

$A_E = H_E \cdot B_E$ für Folien verfüllt, wobei
$D_E$ dem Eingangsdurchmesser des Verformungskanals bei Fasern und Filamenten
$H_E$ der Eingangshöhe bzw.
$B_E$ der Eingangsbreite des Verformungskanals bei Folien entsprechen,

wobei es ausgeschlossen ist, daß

a) ein Fichtensulfit-Zellstoff mit einem Cuoxam-DP von 490 und einer molekularen Uneinheitlichkeit $U_\eta$ von 5,7, der mit wässrigem N-Methyl-morpholin-N-oxid gemischt und in eine homogene Lösung mit einem Celluloseanteil von 12,8 Gew.-% und einer Dichte von 1,18 g/cm$^3$ überführt und unter Verwendung einer Spinndüse mit Spinnkapillaren, die einen Eintrittsdurchmesser $D_E$ von 228 $\mu$m, einen Austrittsdurchmesser $D_A$ von 150 $\mu$m und eine Länge von 0,05 cm aufweisen, zu Filamenten geformt wird, die etwa 1 cm oberhalb des Eintritts in das Fällbad in einem Winkel von etwa 80 ˚ zur Fadenlaufrichtung mit Luft linienförmig angeblasen werden und die zu avivierten Fasern mit einer Feinheit von 1,10 dtex verarbeitet werden, oder daß
b) eine Mischung aus 98 % Eukalyptus- und 2 % Baumwoll-Linters-Zellstoff mit einem Cuoxam-DP von 543 und einer molekularen Uneinheitlichkeit $U_\eta$ von 6,05, die mit wässrigem N-Methyl-morpholin-N-oxid gemischt und in eine homogene Lösung mit einem Celluloseanteil von 10,6 Gew.-% und einer Dichte von 1,16 g/cm$^3$ überführt und unter Verwendung einer Spinndüse mit Spinnkapillaren, die einen Eintrittsdurchmesser $D_E$ von 221 $\mu$m, einen Austrittsdurchmesser $D_A$ von 140 $\mu$m und eine Länge von 0,05 cm aufweisen, zu Filamenten geformt wird, die etwa 1 cm oberhalb des Eintritts in das Fällbad senkrecht zur Fadenlaufrichtung mit Luft linienförmig angeblasen werden und zu avivierten Fasern mit einer Feinheit von 1,29 oder 1,30 dtex verarbeitet werden.

2. Verfahren nach Anspruch 1, **dadurch gekennzeichnet, dass** der Durchschnittspolymerisationsgrad $DP_{Cuoxam}^{L\ddot{o}sung}$

im Bereich 350 - 2000, vorzugsweise 450 - 750 und die molekulare Uneinheitlichkeit $U_\eta$ im Bereich 1,5 - 12, vorzugsweise 2,5 - 7 liegt.

**3.** Verfahren nach Anspruch 1, **dadurch gekennzeichnet, dass** der Verformungskanaleingangsdurchmesser $D_E$ bei Filamenten und Spinnfasern im Bereich 0,015 - 0,3 cm, vorzugsweise 0,018 - 0,03 cm liegt.

**4.** Verfahren nach Anspruch 1, **dadurch gekennzeichnet, dass** bei Folien der Verformungskanaleingangsquerschnitt $A_E$ aus dem Produkt $\sqrt{H_E} \cdot \sqrt{B}$ folgt und die Verformungskanaleingangshöhe $H_E$ im Bereich 0,5 - 0,05 cm liegt.

**5.** Verfahren nach Anspruch 1, **dadurch gekennzeichnet, dass** die Cellulosekonzentration $c_{Cell.}$ 3 -16 %, vorzugsweise 9 - 14 % beträgt.

**6.** Verfahren nach Anspruch 1, **dadurch gekennzeichnet, dass** die Feinheit fadenförmiger Celluloseendloskörper im Bereich 0,2 - 20 dtex, vorzugsweise 0,9 - 2 dtex liegt.

**7.** Verfahren nach Anspruch 1, **dadurch gekennzeichnet, dass** die Nullscherviskosität der Spinnlösung im Verformungskanal im Bereich 2000 -10000, vorzugsweise 4000 - 7000 Pas liegt.

**8.** Verfahren nach Anspruch 1, **dadurch gekennzeichnet, dass** die Relaxationszeit der Lösung bei 85˚C im Bereich 0,5 - 80 s, vorzugsweise 1 - 8 s liegt.

**9.** Verfahren nach Anspruch 1 - 8, **dadurch gekennzeichnet, dass** die Dehngeschwindigkeit $\dot{\varepsilon}_{D,a}$ der Verformung in den Stufen b) und c) die Beziehung

$$\dot{\varepsilon}_{D,a} = \sqrt{\dot{\varepsilon}_D \cdot \dot{\varepsilon}_a} = 19,1 \cdot 10^{-5} \frac{T_{10} \cdot v_a}{\rho_z \cdot c_{Cell.} \cdot D_E \cdot D_A} \sqrt{\frac{e^{\ln SV_D + \ln SV_a - 2}}{l \cdot a}} \leq 160 s^{-1}$$

erfüllt.

**10.** Verfahren nach Anspruch 1 - 6 und 8 - 9, **dadurch gekennzeichnet, dass** beim Erspinnen von Spinnfasern und Folien die Dehngeschwindigkeit vorzugsweise im Bereich 6 - 60 1/s liegt.

**11.** Verfahren nach Anspruch 1 - 3 und 5 - 8, **dadurch gekennzeichnet, dass** beim Erspinnen von Filamentgarnen die Dehngeschwindigkeit vorzugsweise im Bereich 20 - 100 1/s liegt.

**Claims**

**1.** Process for producing continuous shaped cellulose articles from pulp by the dry-wet extrusion process using aqueous amine oxides, especially N-methylmorpholine N-oxide, which comprises

   a) pulp and aqueous amine oxide being mixed and converted into a homogeneous solution by water removal and shearing,
   b) the solution being fed to at least one shaping channel and shaped into a continuous shaped cellulose article,
   c) the shaped solution being transported through a noncoagulating medium with simultaneous further shaping,
   d) the continuous shaped cellulose article being exposed to a linear air or gas flow at right angles to its direction of transport shortly before entry into the coagulation bath,
   e) the continuous shaped cellulose article being precipitated in a coagulation bath, diverted over a godet/roll to separate it from the coagulation bath, washed in a multistage aftertreatment apparatus, optionally bleached, finished, dried and wound up or cut into staple and dried,

   **characterized in that** the operation in steps a) to e) satisfies the mathematical expression

$$10 \leq \frac{3 \cdot \sqrt[3]{\dfrac{DP^{\text{solution}}_{\text{cuoxam}}}{2}}}{\left(2-\dfrac{2}{U_\eta}\right)} + \frac{\sqrt[4]{\dfrac{DP^{\text{solution}}_{\text{cuoxam}}}{2}}}{\left(2-\dfrac{2}{U_\eta^2}\right)} \cdot 105.4 \cdot \sqrt{\frac{A_E \cdot \rho_{\text{solution}} \cdot c_{\text{cell.}}}{T_{10}}} \leq 90$$

where

$DP^{\text{solution}}_{\text{cuoxam}}$ is the average degree of polymerization of the cellulose in the polymer solution, determined by the cuoxam method,

$U_\eta$ is the molecular dispersity, determined from the rheological data of the cellulose solution,
$A_E$ is the entry cross-section of the shaping channel in cm$^2$
$\rho_{\text{solution}}$ is the density of the polymer solution in g/cm$^3$
$c_{\text{cell.}}$ is the cellulose concentration of the solution in %
$T_{10}$ is the fineness of the continuous shaped article in dtex

and $A_E = \dfrac{D_E^2 \cdot \pi}{4}$ meets the condition for fibers and filaments and

$A_E = H_E \cdot B_E$ meets the condition for films, where
$D_E$ is the inlet diameter of the shaping channel in the case of fibers and filaments
$H_E$ is the inlet height and
$B_E$ is the inlet width of the shaping channel in the case of films,

it being excluded that

a) a spruce sulphite pulp having a cuoxam DP of 490 and a molecular non-uniformity $U_\eta$ of 5.7, mixed with aqueous N-methylmorpholine N-oxide and converted into a homogeneous solution having a cellulose fraction of 12.8% by weight and a density of 1.18 g/cm$^3$ and shaped into filaments using a spinneret die with spinning capillaries which have an inlet diameter $D_E$ of 228 $\mu$m, an outlet diameter $D_A$ of 150 $\mu$m and a length of 0.05 cm, the filaments, about 1 cm above the entry into the coagulation bath, being blown linearly with air at an angle of approximately 80° to the direction of filament transport and being processed to finish-treated fibres having a fineness of 1.10 dtex, or that

b) a mixture of 98% eucalyptus pulp and 2% cotton linters having a cuoxam DP of 543 and a molecular non-uniformity $U_\eta$ of 6.05, mixed with aqueous N-methylmorpholine N-oxide and converted into a homogeneous solution having a cellulose fraction of 10.6% by weight and a density of 1.16 g/cm$^3$ and shaped into filaments using a spinneret die with spinning capillaries which have an inlet diameter $D_E$ of 221 $\mu$m, an outlet diameter $D_A$ of 140 $\mu$m and a length of 0.05 cm, the filaments, about 1 cm above the entry into the coagulation bath, being blown linearly with air at right angles to the direction of filament transport and being processed to finish-treated fibres having a fineness of 1.29 or 1.30 dtex.

2. Process according to Claim 1, **characterized in that** the average degree of polymerization $DP^{\text{solution}}_{\text{cuoxam}}$ is in the range 350-2000, preferably 450-750 and the molecular dispersity $U_\eta$ is in the range 1.5-12 and preferably 2.5-7.

3. Process according to Claim 1, **characterized in that** the shaping channel inlet diameter $D_E$ is in the range 0.015-0.3 cm and preferably 0.018-0.03 cm in the case of filaments and fibers.

4. Process according to Claim 1, **characterized in that** in the case of films the shaping channel inlet cross section

$A_E$ follows from the product $\sqrt{H_E} \cdot \sqrt{B}$ and the shaping channel inlet height $H_E$ is in the range 0.5-0.05 cm.

5. Process according to Claim 1, **characterized in that** the cellulose concentration $c_{cell.}$ is 3-16 %, preferably 9-14 %.

6. Process according to Claim 1, **characterized in that** the fineness of filamentary continuous cellulose articles is in the range 0.2-20 dtex and preferably 0.9-2 dtex.

7. Process according to Claim 1, **characterized in that** the zero shear viscosity of the spinning solution in the shaping channel is in the range 2000-10 000 and preferably 4000-7000 Pas.

8. Process according to Claim 1, **characterized in that** the relaxation time of the solution at 85 °C is in the range 0.5-80 s and preferably 1-8 s.

9. Process according to Claim 1-8, **characterized in that** the elongation rate $\dot{\varepsilon}_{D,a}$ of the shaping in steps b) and c) satisfies the mathematical expression

$$\dot{\varepsilon}_{D,a} = \sqrt{\dot{\varepsilon}_D \cdot \dot{\varepsilon}_a} = 19.1 \cdot 10^{-5} \frac{T_{10} \cdot v_a}{\rho_s \cdot c_{cell.} \cdot D_E \cdot D_A} \sqrt{\frac{e^{\ln SV_D + \ln SV_a - 2}}{l \cdot a}} \leq 160 s^{-1}$$

10. Process according to Claim 1-6 and 8-9, **characterized in that** the elongation rate is preferably in the range 6-60 l/s for spinning fibers and films.

11. Process according to Claim 1-3 and 5-8, **characterized in that** the elongation rate is preferably in the range 20-100 1/s for spinning filament yarns.

**Revendications**

1. Procédé pour la fabrication de corps moulés sans fin constitués de cellulose conformément au procédé de filage à sec-au mouillé, avec des aminoxydes aqueux, en particulier le N-oxyde de N-méthylmorpholine, dans lequel

   a) on mélange de la cellulose et un aminoxyde aqueux, et via une déshydratation et un cisaillement, on transforme le mélange en une solution homogène ;
   b) on achemine la solution à au moins un canal de façonnement et on la façonne pour obtenir le corps moulé sans fin à base de cellulose ;
   c) on transporte la solution façonnée à travers un milieu non précipitant avec façonnement ultérieur simultané ;
   d) on expose le corps moulé sans fin à base de cellulose, juste avant son entrée dans le bain de précipitation, en direction perpendiculaire par rapport à sa direction de défilement, à un courant linéaire d'air ou de gaz ;
   e) on précipite le corps moulé sans fin à base de cellulose dans un bain de précipitation, on le sépare du bain de précipitation par déviation pardessus une galette/un cylindre, on le lave dans un dispositif de traitement ultérieur à plusieurs étages, le cas échéant on le décolore, on l'avive, on le sèche et on enroule le corps moulé sans fin à base de cellulose ou bien on le découpe en discontinu et on le sèche,

   **caractérisé en ce que** le procédé, dans les étapes a) à e) répond à l'équation :

$$10 \leq \frac{3 \cdot \sqrt[3]{\dfrac{DP_{Cuoxam}^{Solution}}{2}}}{\left(2 - \dfrac{2}{U_\eta}\right)} + \frac{\sqrt[4]{\dfrac{DP_{Cuoxam}^{Solution}}{2}}}{\left(2 - \dfrac{2}{U_\eta^2}\right)} \cdot 105{,}4 \cdot \sqrt{\frac{A_E \cdot \rho_{Solution} \cdot c_{Cell.}}{T_{10}}} \leq 90$$

.

dans laquelle

$DP_{Cuoxam}^{Solution}$ représente le degré de polymérisation moyen de la cellulose dans la solution polymère, déterminé conformément au procédé de Cuoxam ;

$U_\eta$ représente l'inhomogénéité moléculaire déterminée à partir des données rhéologiques de la solution de cellulose ;

$A_E$ représente la section transversale d'entrée du canal de façonnement en cm$^2$ ;

$\rho_{Solution}$ représente la densité de la solution polymère en g/cm$^3$ ;

$c_{Cell.}$ représente la concentration de cellulose de la solution en % ;

$T_{10}$ représente la finesse du corps moulé sans fin en dtex ; et

$$A_E = \frac{D_E^2 \cdot \pi}{4}$$ représente la condition remplie pour des fibres et pour des filaments, respectivement

$A_E = H_E \cdot B_E$ représente la condition remplie pour des films,

$D_E$ correspondant au diamètre d'entrée du canal de déformation dans le cas de fibres et de filaments ;

$H_E$ correspondant à la hauteur d'entrée, respectivement

$B_E$ correspondant à la largeur d'entrée du canal de déformation dans le cas des feuilles ;

dans lequel on exclut le fait de

a) transformer en filaments de la cellulose au bisulfite provenant d'épicéa, possédant une valeur Cuoxam-DP de 490 et une inhomogénéité moléculaire $U_\eta$ de 5,7, que l'on mélange avec du N-oxyde de N-méthyl-morpholine aqueux et que l'on transforme en une solution homogène possédant une fraction de cellulose de 12,8 % en poids et une densité de 1,18 g/cm$^3$, et en utilisant une filière dont les capillaires présentent un diamètre d'entrée $D_E$ de 228 $\mu$m, un diamètre de sortie $D_A$ 250 $\mu$m et une longueur de 0,05 cm, les filaments en question étant introduits de manière linéaire avec de l'air par soufflage, à une distance d'environ 1 cm au-dessus de l'entrée, dans le bain de précipitation en formant un angle d'environ 80° par rapport au défilement des fils et étant soumis à un traitement pour obtenir des fibres avivées possédant une finesse de 1,10 dtex ; ou le fait de

b) transformer en filaments un mélange de cellulose provenant d'eucalyptus à concurrence de 98 % et de cellulose de linters de coton à concurrence de 2 %, possédant une valeur Cuoxam-DP de 543 et une inhomo-généité moléculaire $U_\eta$ de 6,05, que l'on mélange avec du N-oxyde de N-méthyl-morpholine aqueux et que l'on transforme en une solution homogène possédant une fraction de cellulose de 10,6 % en poids et une densité de 1,16 g/cm$^3$, et en utilisant une filière dont les capillaires présentent un diamètre d'entrée $D_E$ de 221 $\mu$m, un diamètre de sortie $D_A$ 140 $\mu$m et une longueur de 0,05 cm, les filaments en question étant introduits de manière linéaire avec de l'air par soufflage, à une distance d'environ 1 cm au-dessus de l'entrée, dans le bain de précipitation perpendiculairement à la direction de défilement des fils et étant soumis à un traitement pour obtenir des fibres avivées possédant une finesse de 1,29 dtex ou de 1,30 dtex.

2. Procédé selon la revendication 1, **caractérisé en ce que** le degré de polymérisation moyen $DP_{Cuoxam}^{Solution}$ se situe dans la plage de 350 à 2000, de préférence de 450 à 750 et l'inhomogénéité moléculaire $U_\eta$ se situe dans la plage de 1,5 à 12, de préférence de 2,5 à 7.

3. Procédé selon la revendication 1, **caractérisé en ce que** le diamètre de l'entrée du canal de façonnement $D_g$, dans le cas de filaments et de fibres à tisser, se situe dans la plage de 0,015 à 0,3 cm, de préférence de 0,018 à 0,03 cm.

**4.** Procédé selon la revendication 1, **caractérisé en ce que**, pour des films, la section transversale d'entrée du canal de façonnement $A_E$ dépend du produit $\sqrt{H_E} \cdot \sqrt{B}$ et la hauteur de l'entrée du canal de façonnement $H_E$ se situe dans la plage de 0,5 à 0,05 cm.

**5.** Procédé selon la revendication 1, **caractérisé en ce que** la concentration de cellulose $C_{Cell.}$ s'élève de 3 à 16 %, de préférence de 9 à 14 %.

**6.** Procédé selon la revendication 1, **caractérisé en ce que** le titrage des corps moulés sans fin à base de cellulose en forme de fil se situe dans la plage de 0,2 à 20 dtex, de préférence de 0,9 à 2 dtex.

**7.** Procédé selon la revendication 1, **caractérisé en ce que** la viscosité à cisaillement nul de la solution de filature dans le canal de façonnement se situe dans la plage de 2000 à 10.000, de préférence de 4000 à 7000 Pas.

**8.** Procédé selon la revendication 1, **caractérisé en ce que** le temps de relaxation de la solution à 85 °C se situe dans la plage de 0,5 à 80 s, de préférence de 1 à 8 s.

**9.** Procédé selon les revendications 1 à 8, **caractérisé en ce que** la vitesse d'allongement $\dot{\varepsilon}_{D.a}$ de la déformation dans les étapes b) et c) répond à l'équation :

$$\dot{\varepsilon}_{D.a} = \sqrt{\dot{\varepsilon}_D \cdot \dot{\varepsilon}_a} = 19{,}1 \cdot 10^{-5} \frac{T_{10} \cdot v_a}{\rho_{\perp} \cdot c_{Cell.} \cdot D_E \cdot D_A} \sqrt{\frac{e^{\ln SV_D + \ln SV_a - 2}}{l \cdot a}} \leq 160 s^{-1}$$

**10.** Procédé selon les revendications 1 à 6 et 8 - 9, **caractérisé en ce que**, lors du filage de fibres à tisser et de films, la vitesse d'allongement se situe de préférence dans la plage de 6 à 60 l/s.

**11.** Procédé selon les revendications 1 à 3 et 5 à 8, **caractérisé en ce que**, lors du filage de fils de filaments, la vitesse d'allongement se situe de préférence dans la plage de 20 à 100 l/s.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4246221 A
- US 4416698 A
- US 5417909 A
- EP 0430926 A
- EP 0494852 A
- EP 0756025 A
- WO 9428210 A
- WO 9620300 A
- EP 0584318 A
- EP 0671492 A
- EP 0795052 A
- WO 9428218 A
- WO 9621758 A
- EP 0797694 A
- DE 10025230
- DE 10025231
- EP 0659219 A
- EP 0731856 A
- EP 0853146 A
- EP 0783602 A
- EP 0796358 A
- WO 9745574 A
- WO 9725462 A
- WO 9858102 A
- WO 9858103 A
- WO 0218682 A